# EUROPÄISCHE PATENTSCHRIFT

(11) **EP 0 370 193 B1**
(45) Veröffentlichungstag und Bekanntmachung des Hinweises auf die Patenterteilung: **27.10.1993**
(21) Anmeldenummer: 89117355.1
(22) Anmeldetag: 20.09.1989
(51) Int. Cl.: F16L 55/18, F16L 55/16

(54) **Verfahren zum partiellen Sanieren von Rohren, insbesondere von Dränrohren**
Process for the partial reconstruction of pipes, especially drainpipes
Procédé pour la restauration partielle de tuyaux, en particulier de drains

(30) Priorität: 19.11.1988 DE 3839176
(43) Veröffentlichungstag der Anmeldung: 30.05.1990
(73) Patentinhaber: Veltrup, Elmar M., Dipl.-Ing., D-47804 Krefeld (DE)
(72) Erfinder: Veltrup, Elmar M., Dipl.-Ing., D-47804 Krefeld (DE)
(74) Vertreter: Stark, Walter, Dr.-Ing.

(56) Entgegenhaltungen:
- DE-A- 1 817 394
- DE-A- 2 040 838
- US-A- 2 312 993
- US-A- 3 363 301
- US-A- 4 029 128
- PATENT ABSTRACTS OF JAPAN vol. 3, no. 130 (M-78) 27 Oktober 1979; & JP-A-54 106923 (Sumitomo) 22 August 1979

## Beschreibung

Die Erfindung betrifft ein Verfahren zum partiellen Sanieren von Rohren, insbesondere Dränrohren, bei dem die Schadstelle innenseitig mit einer Beschichtung abgedeckt wird, wobei um einen rohrförmigen Ballon, dessen Umfang dem Innenumfang des zu sanierenden Rohres entspricht, in Umfangsrichtung ein Abdichtungsstreifen gelegt wird und der Ballon in das Rohr bis zur Schadstelle gebracht sowie dort aufgebläht wird, bis der Abdichtungsstreifen innenseitig am Rohr anliegt und die Schadstelle verschließt, und wobei dann der Ballon wieder aus dem Rohr entfernt wird.

Verfahren zum Sanieren von Rohren gibt es in verschiedenen Ausführungen. In der Regel werden dabei komplette Rohrstrecken saniert, d.h. mit einer durchgehenden inneren Beschichtung versehen. Dränrohre sind jedoch wasserdurchlässig, denn sie sollen Wasser aus dem umgebenden Erdreich aufnehmen. Sind Dränrohre beschädigt oder an den Muffen unsauber montiert, besteht die Gefahr, daß große Fremdkörper in die Rohre hineinfallen oder eindringen und dadurch die Funktion beeinträchtigen. Eine Sanierung darf nur im Bereich der Schadstelle erfolgen, damit nach wie vor eine Versickerung des Wassers möglich ist und das Dränrohr gegebenenfalls auch mit Hochdruckwasser gespült werden kann, ohne neue Beschädigungen zu erzeugen. Oft ist es aber nicht möglich, die Dränrohre auszugraben und zu erneuern, weil die Dränrohre entweder sehr tief oder an unzugänglichen Stellen verlegt sind. Der Querschnitt der Dränrohre kann rund oder tunnelförmig mit einer flachen Rohrsohle sein. Sie sind in der Regel nicht begehbar und auch in Bögen verlegt, so daß es schwierig ist, zur Schadstelle zu gelangen.

Bei einem Verfahren der eingangs beschriebenen Gattung (DE-A-2040838) wird ein im wesentlichen formstabiler oder durch Ummantelung mit einem Metallgewebe formstabil gemachter Ballon verwendet, der in das zu sanierende Rohr bis zur Schadstelle eingeschoben und dort aufgebläht wird, damit das zwischen dem Ballon, Umfangsdichtungen und dem Metallgewebe gehaltene Abdichtungsmaterial gegen die Schadstelle gepreßt werden kann. Das setzt voraus, daß die Schadstelle einfach zu erreichen ist, also zwischen einem Kontrollschacht und der Schadstelle keine wesentlichen Hindernisse in Form von Rohrbögen, Rohrkrümmern oder dergleichen vorhanden sind. - Bei anderen bekannten Verfahren (PATENT ABSTRACTS OF JAPAN vol. 3, no. 130 (M-78) 27 Oktober 1979, & JP-A-54 106923 (SUMITOMO) 22 August 1979) wird ein außenseitig mit Abdichtungsmaterial versehener Folienschlauch in Längsrichtung gefaltet und dann in das zu sanierende Rohr eingeführt, wo der Folienschlauch aufgebläht wird. Der Folienschlauch soll im Rohr verbleiben. Ein in Längsrichtung gefalteter Folienschlauch ist aber kein formstabiles Gebilde, so daß es nicht ohne weiteres möglich ist, diesen Folienschlauch in Rohre mit Hindernissen, insbesondere Rohrkrümmern, einzubringen oder einzuziehen, ohne daß die Abdichtungsschicht oder sogar der Folienschlauch beschädigt werden.

Der Erfindung liegt die Aufgabe zugrunde, das gattungsgemäße Verfahren so zu führen, daß auch nicht begehbare Rohre partiell saniert werden können, wobei auch ein oder mehrere Rohrbögen passiert werden können.

Diese Aufgabe wird dadurch gelöst, daß der flachgelegte Ballon mit dem Abdichtungsstreifen an einer Stange oder an einer Platte befestigt und darum ein- oder mehrfach zu einem Paket gefaltet wird, und daß das Paket an der Schadstelle entfaltet wird.

Zur Vorbereitung wird der Ballon mit dem Abdichtungsstreifen vorzugsweise um Faltlinien gefaltet, die sich parallel zu seiner Längsrichtung erstrecken, so daß eine einfache Entfaltung möglich ist. Das so vorbereitete Paket wird mit üblichen Hilfsmitteln zur Schadstelle gezogen oder geschoben, wobei auch ein oder mehrere Rohrbögen durchfahren werden können. Im Bereich der Schadstelle wird die Position des Paketes eingemessen. Dazu können die Transportmittel (Zugseil, Schubstange oder dergleichen) dienen, oder es kann auch eine Videokamera eingesetzt werden.

Bei einer bevorzugten Ausführung der Erfindung erstreckt sich die Stange oder die Platte wenigstens abschnittsweise in das Innere des Ballons und wird dort befestigt. Es versteht sich, daß zwischen Stange oder Platte und Ballon eine hinreichende Abdichtung erfolgt, damit der Ballon aufgebläht werden kann. Das Aufblähen kann mit Luft oder Wasser erfolgen. Beim Aufblähen des Ballons entfaltet sich das Paket und der Abdichtungsstreifen legt sich im Bereich der Schadstelle zunehmend an die Innenseite des Rohres, bis er die Schadstelle vollständig verschließt. Dann wird der Innenraum des Ballons wieder entlastet und der Ballon kann mit Hilfe des Transportmittels, welches auch an die Stange oder die Platte angeschlossen werden kann, wieder aus dem Rohr entfernt werden.

Als Abdichtungsstreifen kommen die üblichen Materialien in Frage. Bevorzugt wird ein Vlies, welches mit einem aushärtenden Harz oder mit einem üblichen Dichtungsmittel versehen, insbesondere getränkt wird. Es versteht sich, daß der Ballon aus einem Material, insbesondere Folienmaterial besteht, an welchem das Harz oder das Dichtungsmittel nicht haftet. Durch entsprechende Formulierung des Harzes sind kurze Aushärtezeiten zu erreichen, so daß der Ballon bald wieder aus dem Rohr herausgezogen werden kann.

Bei einer bevorzugten Ausführung der Erfindung wird das Paket vor dem Einführen in das Rohr mit einer Schutzhülle umgeben, die eine Sollbruchstelle aufweist. Diese Schutzhülle soll das Paket vor Beschädigungen oder unerwünschten Einwirkungen durch im Rohr vorhandene Materialien, z.B. Schlammrückstände oder dergleichen, schützen. Die Schutzhülle weist eine Sollbruchstelle auf, die aufreißt, wenn der Ballon aufgebläht wird und das Paket sich entfaltet. Dazu kann die Schutzhülle ganz oder teilweise perforiert sein. Vollständig perforierte Schutzhüllen wird man verwenden, wenn die Schutzhülle im Rohr bleibt. Die Perforierung ermöglicht dann immer noch eine hinreichende Verbindung zwischen dem Abdichtungsstreifen und der Innenseite des Rohres im Bereich der Schadstelle. Teilweise perforierte oder nicht perforierte Schutzhüllen können nach dem Entfernen des Paketes aus dem Rohr entfernt werden.

Nach der Erfindung kann auch vorgesehen sein, daß um den Abdichtungsstreifen ein Folienschlauch gelegt wird, dessen Innenumfang dem Außenumfang des Abdichtungsstreifens entspricht und der Folienschlauch zusammen mit dem flachgelegten Ballon und dem Abdichtungsstreifen zu einem Paket gefaltet wird. Damit ist es möglich, Bereiche, in denen das zu sanierende Rohr vollkommen unterbrochen ist, in der Weise zu sanieren, daß nach dem Aufblähen des Paketes der zusätzliche Folienschlauch die Rohrlücke überbrückt und eine rohrförmige Begrenzung für den Abdichtungsstreifen bildet. Insoweit ist ein komplettes neues Rohrstück nach dem Aushärten entstanden.

Im folgenden wird ein in der Zeichnung dargestelltes Ausführungsbeispiel der Erfindung erläutert; es zeigen:
- Fig. 1: bis 3 verschiedene Arbeitsschritte zur Vorbereitung des in das Rohr einzuführenden Paketes,
- Fig. 4: schematisch und in perspektivischer Darstellung ein saniertes Dränrohr.

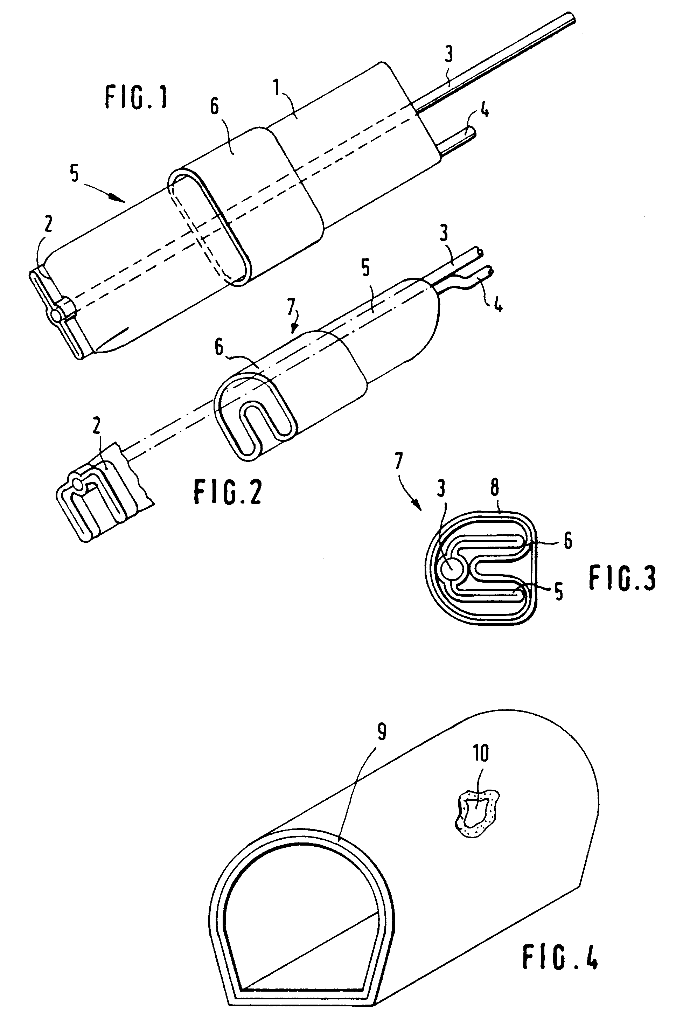

In Fig. 1 erkennt man einen längeren Schlauchabschnitt 1 aus einer Folie. Der Schlauchabschnitt 1 ist an dem in Fig. 1 linken Ende mit einer Schweißnaht 2 verschlossen. Durch den Schlauchabschnitt 1 erstreckt sich eine Stange 3, die bei der dargestellten Ausführung über die Schweißnaht 2 mit dem Schlauchabschnitt 1 verbunden ist und am anderen Ende über den Schlauchabschnitt 1 hinausragt. An diesem Ende besitzt der Schlauchabschnitt 1 auch einen Anschlußnippel 4 oder dergleichen, der der Zuführung eines Blähmittels (Luft oder Wasser) dient. An diesem Ende wird der Schlauchabschnitt 1 ebenfalls geschlossen, und zwar entweder ebenfalls mit einer Schweißnaht, die den Schlauchabschnitt 1 auch gegen die Stange 3 abdichtet, oder durch abdichtendes Zusammenschnüren, wie es in Fig. 2 dargestellt ist. Der so geschlossene Schlauchabschnitt 1 bildet einen rohrförmigen Ballon 5. Um den flachgelegten Ballon 5 wird etwa im mittigen Bereich ein Abdichtungsstreifen 6 gelegt, der bei der dargestellten Ausführung aus einem aus härtendem Harz getränkten Vlies besteht. Der flachgelegte Ballon 5 mit dem Abdichtungsstreifen 6 wird dann um eine sich in Längsrichtung des Ballons 5 erstreckende Faltlinie gefaltet, so daß ein Paket 7 entsteht (Fig. 2). Der Ballon 5 mit dem Abdichtungsstreifen 6 kann auch mehrfach gefaltet werden.

Über das Paket 7 wird dann eine Schutzhülle 8 gezogen, die in Fig. 3 erkennbar ist, wo ein Querschnitt des fertigen Paketes 7 wiedergegeben ist. Die Schutzhülle 8 besitzt eine nicht dargestellte Sollbruchstelle, z.B. eine sich in Längsrichtung des Paketes erstreckende Perforation.

Das Paket 7 mit der Schutzhülle 8 wird dann in das zu sanierende Dränrohr 9 eingeschoben oder eingezogen.

Wird das Paket 7 eingeschoben, dann muß die Stange 3 flexibel sein. Wird das Paket 7 eingezogen, empfiehlt sich eine flexible Stange 3, insbesondere dann, wenn enge Rohrbögen zu durchfahren sind. In jedem Fall dient die Stange 3, bzw. ihr im Paket 7 befindlicher Abschnitt zur Formstabilisierung des Paketes 7 während des Transportes.

Hat das Paket 7 den Bereich der Schadstelle 10 erreicht, dann wird es dort entweder mit Hilfe der Transportmittel oder mit Hilfe einer Videokamera eingemessen und positioniert. Anschließend wird der Ballon 5 mit Luft oder Wasser, welche über den Anschlußnippel 4 zugeführt werden, aufgebläht. Dabei reißt zunächst die Sollbruchstelle der Schutzhülle 8 auf, die dann entfernt werden kann. Soll die Schutzhülle 8 im Rohr verbleiben, dann muß sie so perforiert sein, daß durch die Perforationen der Schutzhülle 8 hindurch eine hinreichende Haftung des Harzes am oder im Abdichtungsstreifen 6 mit der Innenseite des Dränrohres 9 gesichert ist. Nach dem Aufplatzen der Schutzhülle 8 entfaltet sich das Paket 7, und der Abdichtungsstreifen 6 legt sich glatt an die Innenseite des Dränrohres 9 an, wobei auch Unebenheiten, Löcher oder fehlende Rohrstücke sauber überdeckt werden.

Nach dem Aushärten des Harzes kann der Innenraum des Ballons 5 wieder entlastet werden. Anschließend kann der Ballon 5 mit dem Transportmittel oder mit der Stange 6 aus dem Dränrohr 9 herausgezogen werden. Die Sanierung ist damit abgeschlossen.

Nicht dargestellt ist eine Ausführungsform, bei der um den Abdichtungsstreifen 6 ein Folienschlauch gelegt wird, dessen Innenumfang dem Außenumfang des Abdichtungsstreifens 6 entspricht und der Folienschlauch zusammen mit dem flachgelegten Ballon 5 und dem Abdichtungsstreifen 6 zu einem Paket 7 - ähnlich wie es in den Figuren 2 und 3 dargestellt ist - gefaltet wird.

## Patentansprüche

1. Verfahren zum partiellen Sanieren von Rohren, insbesondere Dränrohren, bei dem die Schadstelle innenseitig mit einer Beschichtung abgedeckt wird, wobei um einen rohrförmigen Ballon (5), dessen Umfang dem Innenumfang des zu sanierenden Rohres (9) entspricht, in Umfangsrichtung ein Abdichtungsstreifen (6) gelegt wird und der Ballon (5) in das Rohr (9) bis zur Schadstelle (10) gebracht sowie dort aufgebläht wird, bis der Abdichtungsstreifen (6) innenseitig am Rohr (9) anliegt und die Schadstelle verschließt, und wobei dann der Ballon (5) wieder aus dem Rohr (9) entfernt wird, dadurch gekennzeichnet, daß der flachgelegte Ballon (5) mit dem Abdichtungsstreifen (6) an einer Stange (3) oder an einer Platte befestigt und darum ein- oder mehrfach zu einem Paket (7) gefaltet wird, und daß das Paket (7) an der Schadstelle (10) entfaltet wird.

2. Verfahren nach Anspruch 1, dadurch gekennzeichnet, daß der Ballon (5) mit dem Abdichtungsstreifen (6) um Faltlinien gefaltet wird, die sich parallel zu seiner Längsrichtung erstrecken.

3. Verfahren nach Anspruch 1, dadurch gekennzeichnet, daß die Stange (3) oder die Platte Sich wenigstens abschnittsweise in das Innere des Ballons (5) erstreckt und dort befestigt wird.

4. Verfahren nach einem der Ansprüche 1 bis 3, dadurch gekennzeichnet, daß der Ballon (5) mit Luft aufgebläht wird.

5. Verfahren nach einem der Ansprüche 1 bis 3, dadurch gekennzeichnet, daß der Ballon (5) mit Wasser aufgebläht wird.

6. Verfahren nach einem der Ansprüche 1 bis 5, dadurch gekennzeichnet, daß der Abdichtungsstreifen (6) mit einem aushärtenden Harz versehen wird.

7. Verfahren nach einem der Ansprüche 1 bis 6, dadurch gekennzeichnet, daß der Abdichtungsstreifen (6) mit einem aushärtenden Harz getränkt wird.

8. Verfahren nach einem der Ansprüche 1 bis 7, dadurch gekennzeichnet, daß das Paket (7) vor dein Einführen in das Rohr (9) mit einer Schutzhülle (8) umgeben wird, die eine Sollbruchstelle aufweist.

9. Verfahren nach einem der Ansprüche 1 bis 8, gekennzeichnet durch die Verwendung einer Schutzhülle (8), die teilweise oder ganz perforiert ist.

10. Verfahren nach einem der Ansprüche 1 bis 9, dadurch gekennzeichnet, daß die Schutzhülle (8) nach dem Entfalten des Pakes (7) aus dem Rohr (9) entfernt wird.

11. Verfahren nach einem der Ansprüche 1 bis 10, dadurch gekennzeichnet, daß um den Abdichtungsstreifen (6) ein Folienschlauch gelegt wird, dessen Innenumfang dem Außenumfang des Abdichtungsstreifens (6) entspricht und der Folienschlauch zusammen mit dem flachgelegten Ballon (5) und dem Abdichtungsstreifen (6) zu einem Paket (7) gefaltet wird.

## Claims

1. Method for the partial reconstruction of pipes, especially drainpipes, wherein the defective location is covered with a coating on the inner surface, a sealing strip (6) being placed around a tubular balloon (5) in the circumferential direction, the circumference of said balloon corresponding to the inner circumference of the pipe (9) to be reconstructed, and the balloon (5) is introduced into the pipe (9) as far as the defective location (10) and inflated there until the sealing strip (6) abuts against the pipe (9) on the inner surface and seals the defective location, and the balloon (5) then being re-removed from the pipe (9), characterised in that the balloon (5), placed flat, is mounted with the sealing strip (6) on a rod (3) or on a plate and is folded therearound once or a plurality of times to form a bundle (7), and in that the bundle (7) is unfolded at the defective location (10).

2. Method according to claim 1, characterised in that the balloon (5), with the sealing strip (6), is folded about fold lines which extend parallel to its longitudinal direction.

3. Method according to claim 1, characterised in that the rod (3) or the plate extends, at least in portions, into the interior of the balloon (5) and is secured there.

4. Method according to one of claims 1 to 3, characterised in that the balloon (5) is inflated with air.

5. Method according to one of claims 1 to 3, characterized in that the balloon (5) is inflated with water.

6. Method according to one of claims 1 to 5, characterized in that the sealing strip (6) is provided with an age-hardening resin.

7. Method according to one of claims 1 to 6, characterised in that the sealing strip (6) is impregnated with an age-hardening resin.

8. Method according to one of claims 1 to 7, characterized in that, prior to being introduced into the pipe (9), the bundle (7) is surrounded with a protective sleeve (8), which has an intended breaking point.

9. Method according to one of claims 1 to 8, characterised by the use of a protective sleeve (8), which is partially or wholly perforated.

10. Method according to one of claims 1 to 9, characterized in that the protective sleeve (8) is removed from the pipe (9) after the unfolding of the bundle (7).

11. Method according to one of claims 1 to 10, characterized in that a tubular film is placed around the sealing strip (6), the inner circumference of said film corresponding to the outer circumference of the sealing strip (6), and the tubular film is folded, together with the balloon (5), placed flat, and the sealing strip (6), to form a bundle (7).

## Revendications

1. Procédé pour réparer partiellement des tuyaux, notamment des tuyaux de drainage, selon lequel l'endroit endommagé est recouvert à l'intérieur d'un revêtement, à l'occasion de quoi une bande d'étanchéification (6) est enroulée autour d'un ballon (5) tubulaire dont le périmètre correspond au périmètre intérieur du tuyau (9) à réparer, et le ballon (5) est acheminé dans le tuyau (9) jusqu'à l'endroit endommagé (10) puis y est gonflé jusqu'à ce que la bande d'étanchéification (6) adhère sur l'intérieur du tuyau (9) et obture l'endroit endommagé, et à l'occasion de quoi le ballon (5) est de nouveau retiré du tuyau (9), caractérisé en ce que le ballon (5) posé à plat est fixé avec la bande d'étanchéification (6) sur une barre (3) ou sur une plaque et est replié une ou plusieurs fois autour de cette dernière pour former un paquet (7), et en ce que le paquet (7) est déployé à l'endroit endommagé (10).

2. Procédé selon la revendication 1, caractérisé en ce que le ballon (5) est plié avec la bande d'étanchéification (6) autour de lignes de pliage qui s'étendent parallèlement à sa direction longitudinale.

3. Procédé selon la revendication 1, caractérisé en ce que la barre (3) ou la plaque s'étend au moins en partie à l'intérieur du ballon (5) et y est fixée.

4. Procédé selon l'une des revendications 1 à 3, caractérisé en ce que le ballon (5) est gonflé avec de l'air.

5. Procédé selon l'une des revendications 1 à 3, caractérisé en ce que le ballon (5) est gonflé avec de l'eau.

6. Procédé selon l'une des revendications 1 à 5, caractérisé en ce que la bande d'étanchéification (6) est enduite de résine thermodurcissable.

7. Procédé selon l'une des revendications 1 à 6, caractérisé en ce que la bande d'étanchéification (6) est imprégnée de résine thermodurcissable.

8. Procédé selon l'une des revendications 1 à 7, caractérisé en ce que le paquet (7) est entouré d'une gaine protectrice présentant un point destiné à la rupture avant d'être introduit dans le tuyau (9).

9. Procédé selon l'une des revendications 1 à 8, caractérisé par l'utilisation d'une gaine protectrice (8) qui est partiellement ou entièrement perforée.

10. Procédé selon l'une des revendications 1 à 9, caractérisé en ce que la gaine protectrice (8) est retirée du tuyau (9) après avoir déployé le paquet (7).

11. Procédé selon l'une des revendications 1 à 10, caractérisé en ce qu'une gaine en forme de film dont le périmètre intérieur correspond au périmètre extérieur de la bande d'étanchéification (6) est placée autour de la bande d'étanchéification (6), et en ce que la gaine en forme de film est pliée avec le ballon (5) posé à plat et la bande d'étanchéification (6) pour former un paquet (7).
